(19) Europäisches Patentamt / European Patent Office / Office européen des brevets

(11) **EP 2 434 835 B1**

(12) **EUROPEAN PATENT SPECIFICATION**

(45) Date of publication and mention
of the grant of the patent:
**10.07.2013 Bulletin 2013/28**

(51) Int Cl.:
*H04W 92/20* (2009.01)   *H04B 7/02* (2006.01)
*H04L 12/46* (2006.01)   *H04W 72/04* (2009.01)
*H04W 8/26* (2009.01)   *H04W 88/08* (2009.01)

(21) Application number: **10178477.5**

(22) Date of filing: **22.09.2010**

(54) **Coordinated multi-point transmission COMP data and signalling on X2-interface using additional VLAN identifier**

Coordinated multi-point Übertragungsdaten und -signalisierung auf der X2-Schnittstelle unter Nutzung einer zusätzlichen VLAN-Kennung

Coordianted multi-point transmission données et signalisation sur l'interface X2 utilisant la marque additionnelle de VLAN

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**28.03.2012 Bulletin 2012/13**

(73) Proprietor: **Deutsche Telekom AG**
**53113 Bonn (DE)**

(72) Inventors:
• **Kreher, Wolfgang**
**64839 Münster (DE)**
• **Müller, Jürgen**
**64859 Eppertshausen (DE)**
• **Jungnickel. Dr. Volker**
**10318 Berlin (DE)**
• **Jaeckel, Stephan**
**10785 Berlin (DE)**
• **Bauermeister, Frank**
**10319 Berlin (DE)**
• **Forck, Frank**
**14612 Falkensee (DE)**
• **Haustein, Dr. Thomas**
**14469 Potsdam (DE)**

(74) Representative: **Vossius & Partner**
**Siebertstrasse 4**
**81675 München (DE)**

(56) References cited:
• **JUNGNICKEL V ET AL: "Coordinated Multipoint Trials in the Downlink", GLOBECOM WORKSHOPS, 2009 IEEE, IEEE, PISCATAWAY, NJ, USA, 30 November 2009 (2009-11-30), pages 1-7, XP031585744, ISBN: 978-1-4244-5626-0**
• **FOULI K ET AL: "The road to carrier-grade ethernet -[Topics in optical communications]", IEEE COMMUNICATIONS MAGAZINE, IEEE SERVICE CENTER, PISCATAWAY, US, vol. 47, no. 3, 1 March 2009 (2009-03-01), pages S30-S38, XP011254107, ISSN: 0163-6804**
• **SANCHEZ R ET AL: "Ethernet as a carrier grade technology: developments and innovations", IEEE COMMUNICATIONS MAGAZINE, IEEE SERVICE CENTER, PISCATAWAY, US, vol. 46, no. 9, 1 September 2008 (2008-09-01), pages 88-94, XP011234293, ISSN: 0163-6804, DOI: DOI: 10.1109/MCOM.2008.4623712**
• **ALCATEL-LUCENT: "Consideration of Backhaul Technology Evolution in Support of CoMP", 3GPP DRAFT; R1-093344, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090824, 24 August 2009 (2009-08-24), XP050388124, [retrieved on 2009-08-29]**

EP 2 434 835 B1

- V. Jungnickel, A. Forck, S. Jaeckel, F. Bauermeister, S. Schiffermueller, S. Schubert, S. Wahls, L. Thiele, T. Haustein, W. Kreher: "Field Trials using Coordinated Multi-PointTransmission in the Downlink", , 3 October 2011 (2011-10-03), pages 1-6, XP002624923, Retrieved from the Internet: URL:http: //www.mk.tu-berlin.de/publikation en/objects/ 2010/publikation.2010-10-03.260 8149548/datei [retrieved on 2011-02-24]

## Description

The invention provides a mobile communication method as well as a basestation and system in a network using coordinated multipoint, CoMP, transmission, the network comprising a group of base stations serving a plurality of mobile terminals and Virtual Local Area Networks, VLAN, enabled Ethernet switches.

## Background of the Invention

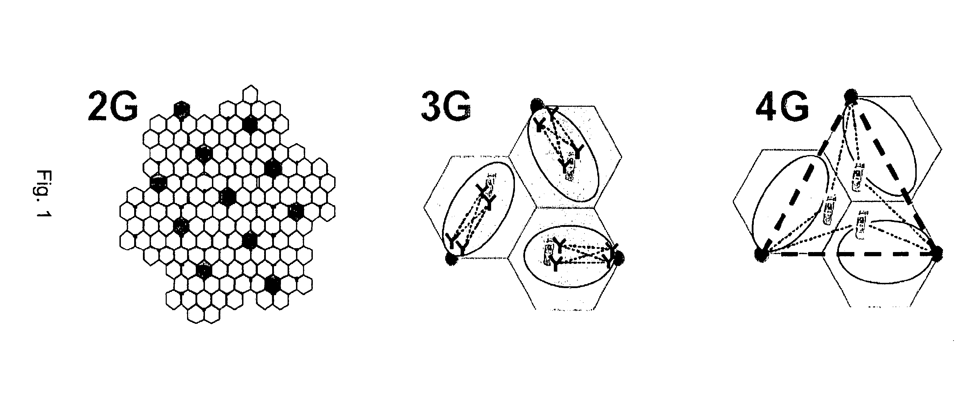

In mobile networks, inter-cell interference is the limiting factor. In Fig. 1, the evolution of interference reduction schemes from the second to the fourth generation of mobile networks is shown. In the $2^{nd}$ generation (2G: GSM), the same frequency is reused only in distant cells. This simple scheme is called frequency reuse. The signal strength is naturally reduced as a function of distance, and in this way, much less interference is received in the cell of interest.

In the $3^{rd}$ generation (3G: CDMA2000, WCDMA, 1xEVDO, HSDPA, HSUPA, LTE Rel. 8), frequency is reused in each cell. Significant inter-cell interference is received especially at the cell borders between adjacent sectors and sectors facing each other from adjacent sites. By integrating multiple antennas into base stations (BS) and terminals, the interference can be reduced. At the base station, several beams can be selected out of a fixed set. At the terminal, the classical optimum combining can be used [1], also known as interference rejection combining (IRC). This means that base station and terminals optimize their spatiotemporal transmission and reception to reduce the unwanted interference from other cells. Essential prerequisites to apply IRC effectively in OFDM-based cellular systems have been worked out recently [7]. In particular, the cells shall be operated synchronously and cell-specific pilots shall be used.

These two features have been recently identified also in 3GPP for LTE Release 10. Terminals sense the frequency-selective signal-to-interference ratio after their equalizers thus inform the base station about frequency resources where they are less exposed to interference. If this information is fed back to the base station, the scheduler can assign these resources selectively to the users. This approach has been recently denoted as interference-aware scheduling [8] and it must not be confused with interference diversity operating w/o feedback [9]. This approach is able to fulfill the IMT-Advanced requirements, and is therefore the most promising candidate technology for Release 10. It has been shown in [10] that the expected MIMO gains can be realized in this way also in the interference-limited scenario, i.e. the capacity almost doubles for all users in the cell if the number of antennas is doubled. Interference-aware scheduling is a cross-layer (PHY and MAC) optimization, and may be one of the last innovation steps of 3G technology.

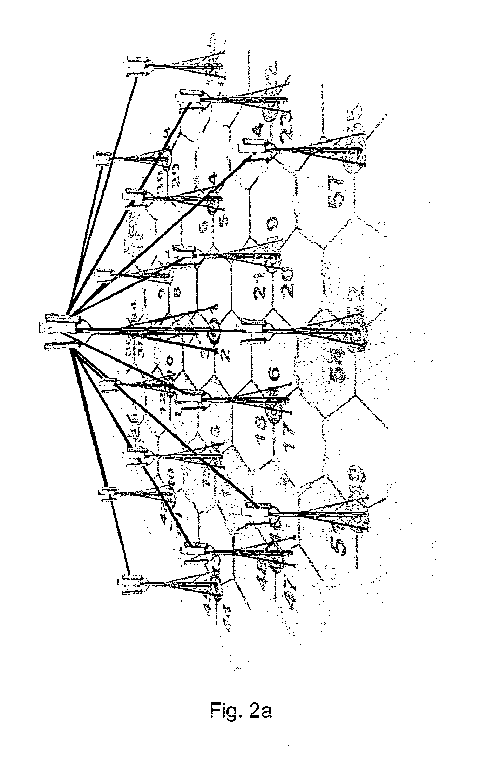

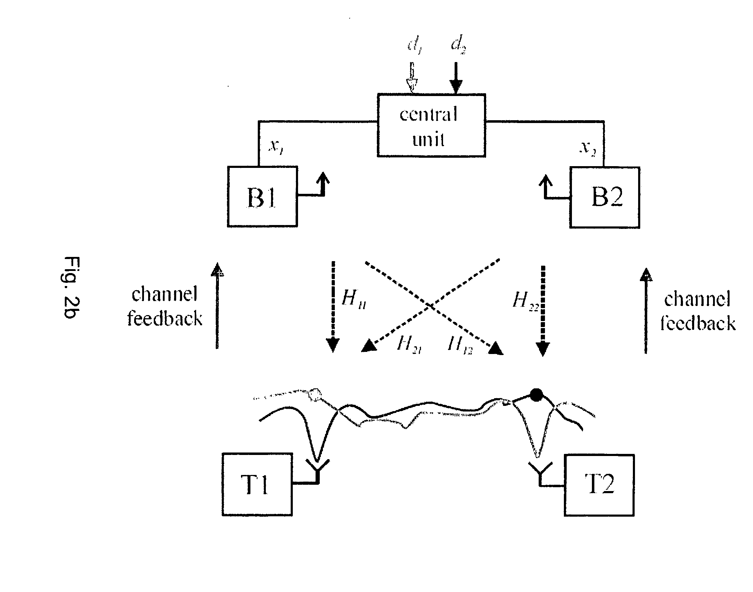

In the $4^{th}$ generation, generalized multiple-input multiple-output (MIMO) techniques will be used with the goal to remove the interference ultimately (see references [2], [3], [4], [5]). Information theory considers the centralized network architecture; see Fig. 2a. The antennas of all BSs are the inputs of the generalized MIMO system and terminal antennas are the outputs. Over a star-like backhaul network, BS antennas are connected to a central unit (CU). For the joint transmission scheme, perfect synchronization, unlimited backhaul capacity and negligible delay are assumed further. Each terminal measures the downlink channel state information (CSI) including the interference to all base stations and feeds this information back over the uplink to the CU in the network (see Fig. 2b). The CSI is used to perform joint signal processing for all the data streams intended for all terminals served in all cells at the CU. The goal of this processing is also sketched in the figure, i.e. the desired signals interfere constructively while the interference from the other base station interferes destructively. One prerequisite is that all BS transmit coherently, which means that the phase must not change within the coherence time.

In the following, the centralized architecture approach will be described in more detail.

Coherent transmission is more easily realized using a centralized architecture at first sight. There is a whole class of MIMO algorithms which can be used for cooperative joint transmission with non-cooperative, distributed receivers. The information theoretic limit is achieved by the so-called Costa theorem [11] stating that if interference is perfectly known already at the transmitter, ideally, all interference can be removed and a performance can be achieved as in an isolated cell (see reference [6]). Practical schemes, such as joint zero forcing or block- diagonal transmission may be less efficient but it is possible to achieve already a large fraction of the potential CoMP gains if the interference is removed prior to the transmission.

The centralized architecture, however, has several practical drawbacks.

One realization is radio-over-fiber (RoF) technology, i.e. there is only a single local oscillator (LO) at the CU. Radio frequency signals are centrally generated and modulated onto a laser diode, transmitted over fiber and recovered using a photodiode. RoF technology is highly developed. There are problems at high RF frequencies where the modulation transfer function of the laser diode is reduced and the signal is distorted. Optical modulation using a Mach-Zender Interferometer (MZI) is still possible at higher RF frequencies but very costly in practice. Having multiple sectors with multiple antennas per sector at one site implies that multiple RF signals need to be transmitted over the same fiber. This can be done by using wavelength-division multiplexing (WDM). Although this is technically feasible, dedicated optical WDM multiplexers and de-multiplexers for each link from the CU to each base station may be very costly. Multiplexing in the electrical domain costs less.

Note that all waveforms shall be transmitted synchronously from all BS. This means that the propagation delays in the star network fed by the CU shall be controlled individually in each link. The delay between transmissions shall be less than the OFDM guard interval. This can be managed by measuring the propagation time in each link and equalizing the delays at the CU base band processing unit using first-in first-out (FIFO) queues. Instead of RoF, nowadays it is getting common to transmit quantized IQ samples of the waveforms over fiber using protocols such as CPRI or OBSAI (baseband-over-fiber, BoF). BoF is commonly used in remote radio heads (RRH) where all the RF electrics is close to the antenna and only the signal processing is located at the CU.

Phase noise is a general drawback of distributed baseband-to-RF conversion applied in RRHs. Even if the carrier frequencies are locked to the CPRI or OBSAI symbol clock, phase noise at distributed radio heads is uncorrelated. The RF phase shall be constant during the coherence interval (given by the time needed in the feedback loop for multi-cell channel estimation, feedback and application of the joint pre-coder). Realistic values are in the order of 10 ms for LTE. This condition imposes high requirements for local oscillators (LO) at distributed radio heads, compared to previous mobile networks where phase variations are tracked for the serving base station on a time scale below 1 ms.

To give an estimate: Frequently phase noise is reduced by -20 dBc/Hz if we go from 10 kHz to 100 kHz offset from the carrier. If we increase the coherence interval by a factor of 10 this is equivalent to slowed down the phase variation by a factor of 10. Rescaling the frequency axis enables us to estimate that, for coherent CoMP in the downlink, the phase noise at the base station LOs shall be 20 dB lower than for LTE.

Transmitting quantized baseband waveforms over fiber means also that the backhaul traffic is multiplied compared to the data rate. The corresponding factor is given by the resolution of the DA converter output, e.g. 12 bits per I and Q signal gives 24 bits per sample and per antenna. For example, if a LTE base station has 4 antennas, the maximum data rate on the feeder network (S1) is specified in the order of 300 Mbit/s for a 20 MHz carrier. The required data rate on each of the links in a star network from the CU to one base station is $30.72*10^6$Hz*4*24 bit $\approx$ 3 Gbit/s.

The distributed architecture will be described in the following.

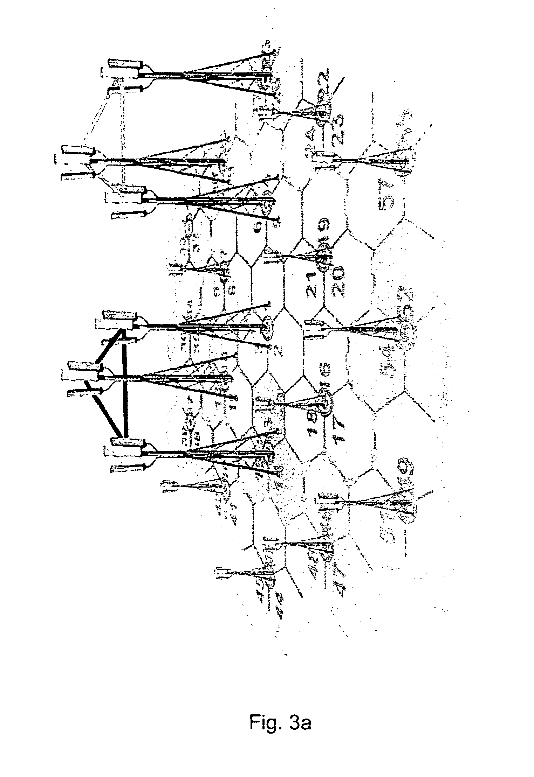

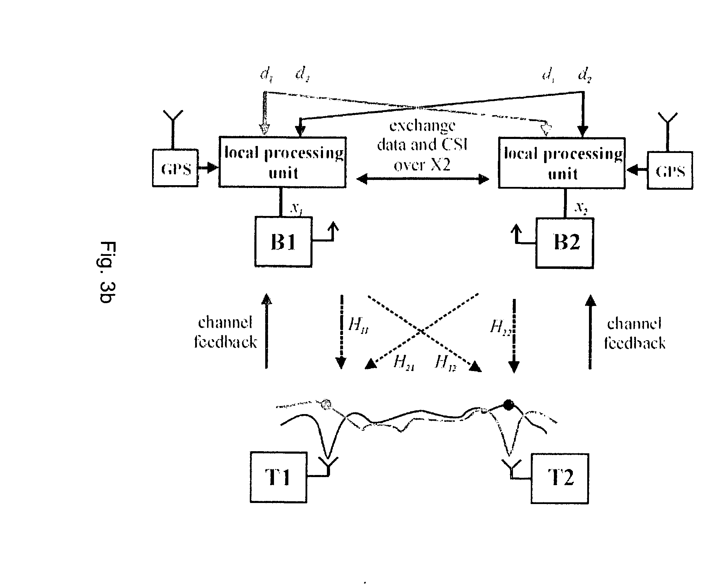

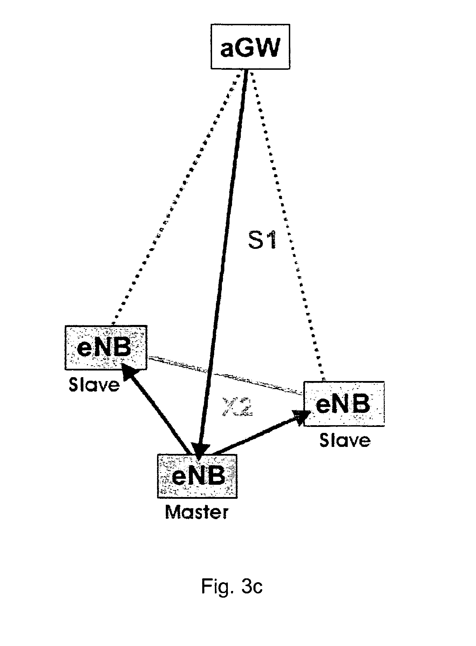

For implementation in mobile networks, the distributed architecture shown in Fig. 3 has been proposed (see references [12], [13], [14]). This architecture has several advantages in the view of network operator's requirements. First of all, all processing is situated in the serving base station being able to exchange information with other base stations. Furthermore, the networking between the base stations shall be based on flat, IP based architecture using standard low-cost Ethernet equipment. Finally, not all but a limited set of base stations transmit data jointly to multiple terminals in their cells (Fig. 3a). Performance evaluation shows that rather than defining fixed sets, the cooperating set should be selected dynamically depending on the position of the terminals. By reducing the set size, complexity, feedback overhead and backhaul traffic are reduced. Of course, the larger the set, the better is the performance.

As fundamental and additional requirements for the distributed concept it is highlighted that all BSs are synchronized in a distribuzted manner e.g. by using a global time and phase-locked frequency references with low phase noise derived from the global positioning system (GPS). Moreover, BS exchange data and CSI needed over the backhaul network. Note that CSI and data shall be exchanged rapidly, to minimize feedback delays and to reduce the latency in the network. So they are exchanged over the direct X2 link in the backhaul, see Fig. 3b. X2 is a low-latency signalling network, see [15].

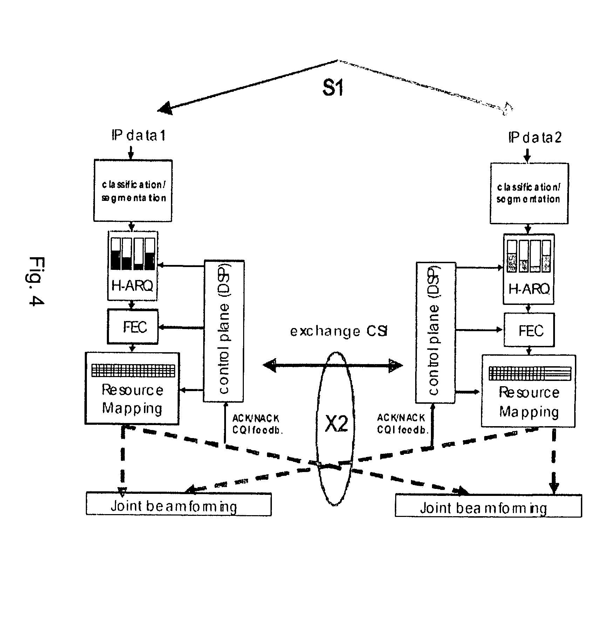

In the system architecture evolution (SAE) defining the network behind LTE, see Fig. 3c, the data flow for a given terminal comes over the S1 link from the advanced gateway (aGW). This flow is terminated as in LTE Rel. 8 at the serving base station denoted as master eNB (enhanced NodeB). After passing the data through the HARQ and MAC layer (see Fig. 4), the data are exchanged between the master and all slave eNBs in the cooperative set. There are timing constraints, which can be fulfilled with buffer memories. The basic requirement is that the same data symbol is jointly transmitted by all cooperating base stations on the same resource element.

Now, reference is again made to Fig. 3b. Since data and all CSI are now available locally, not a CU but each BS is now the genius itself, and all necessary information for joint processing is available locally. Each base station knows the full multicell multiuser channel matrix and computes the weight matrices for the joint transmission locally. This redundant computation of the weights is perhaps the price to be paid in terms of complexity to fulfill the network operator's desire of a distributed CoMP network architecture.

The BS then applies the the local set of rows from the overall weight matrix to perform the locally relevant linear combination of all data streams needed to compute the particular waveforms transmitted from the local antennas. The corresponding matrix-vector multiplication is of smaller size, compared to the centralized concept. I.e. for the data preprocessing, the same effort is needed as in the centralitzed concept. Waveforms are transmitted over the air and they interfere constructively for the desired signal and destructively for the unwanted interference.

In this way, the same interference reduction as with the centralized concept can be achieved, but in a distributed manner. But there are obvious practical advantages: Data instead of IQ sample transfer is a lighter burden for the backhaul compared to the centralized approach. Furthermore, latency constraints for the data transfer can be relaxed since waveforms are computed locally at each base station. Data exchange can be realized with latencies of a few ms.

In the distributed approach, however, the question has been left open how to organize the several flows of information in the CoMP network efficiently and with low latency.

Further background art is described in JUNGNICKEL V. ET AL.: "Coordinated Multipoint Trials in the Downlink", GLOBECOM WORKSHOPS, 2009 IEEE, IEEE, PISCATAWAY, NJ, USA, 20 November 2009 (2009-11-30), pages 1-7; FOULI ET AL.: "The road to carrier-grade Ethernet - [Topics in optical communications]", IEEE COMMUNICATIONS MAGAZINE, IEEE SERVICE CENTER, PISCATAWAY, US, vol. 47, no. 3, 1 March 2009 (2009-03-01), pages S30-S38; SANCHEZ R. ET AL.: "Ethernet as carrier grade technology: developments and innovations", vol. 46, no. 9, 1 September 2008 (2008-09-01), pages 88-94; ALCATEL-LUCENT: "Consideration of Backhaul Technology Evolution in Support of CoMP", 3GPP DRAFT; R1-093344, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Shenzhen, China; 20090824, 24 August 2009 (2009-08-24).

**Summary of the Invention**

The invention is defined in the independent claims. Preferred embodiments are defined in the dependent claims.

**Brief Description of the Drawings**

The invention will now be described in more detail with reference to the drawings.

| | |
|---|---|
| Fig. 1 | shows the evolution of interference reduction schemes in mobile networks; |
| Figs. 2a, 2b | show the centralized CoMP architecture; |
| Figs. 3a - 3c | show the distributed CoMP architecture; |
| Fig. 4 | shows how data are shared between the base stations after the entire MAC layer processing, which can be left decentralized, accordingly; |
| Fig. 5 | shows an exemplary implementation of shared data exhange using Ethernet at cooperative base stations; |
| Fig. 6 | shows CSI feedback and multiplexing with the shared data flow on the X2 interface; and |
| Fig. 7 | shows how VLAN tags are used to identify the cooperation cluster and to organize the data flows. |

The invention will now be described in more detail. Again, according to the invention, three types of data streams are to be considered:

- Feeder link data for the terminal
- Shared data signals
- CSI coming from the terminals

The invention's general approach is that all these streams are organized using the classical Ethernet protocol so that low-cost networking equipment can be used for the backhaul.

*A.) Feeder data on S1*

Feeder data are intended for the mobile terminal served by the base station. In Long Term Evolution, LTE, the feeder data are organized in IP packets and transmitted over the S1 interface. Normally, such traffic is transported over Ethernet anyway.

*B.) Shared data on X2*

As indicated in Fig. 3c, data are transmitted in a first hop over S1 from the aGW to the serving eNB. Data are then packed into transport blocks, encoded and mapped onto the radio bearer, RB. After the MAC layer we copy these already mapped and encoded data and forward the copy in a second hop over X2 to all base stations involved in the CoMP transmission.

Compared to the centralized approach, the invention has the advantage that data bits, and not IQ samples, are exchanged between the base stations. The load in the backhaul is significantly reduced in this way. Moreover, it is easier to synchronize the data at all BS at this stage in the transmission chain where all network and MAC layer processing is already completed. Thus, retransmissions are also controlled locally and need no additional coordination between the BS. Given that the X2 interface does not introduce to much latency, the delay due to data exchange is easily compensated using buffers at the precoder inputs.

Since these shared data are already encoded, the maximum data rate on the X2 interface is given by the inverse of the code rate $\eta$ times the peak rate in the system. For an exemplary 2x2 CoMP implementation with two base stations, this gives 2.150 = 300 Mbit/s. Consider a large network when K base stations in a cluster perform coherent downlink CoMP. X2 is a logical interface and it is assumed here that it will be physically realized over the feeder link at each base station. Hence, the X2 traffic is added to the own S1 data coming over the feeder link as well. In such a setup, a simple equation can be derived for the backhaul required by the distributed CoMP approach. It is given as

$$backhaul = throughput \cdot \left(1 + \frac{K-1}{\eta}\right)$$

Note that the backhaul scales superlinearly with the cluster size *K*. The more base stations are in the cluster, the higher is the throughput.

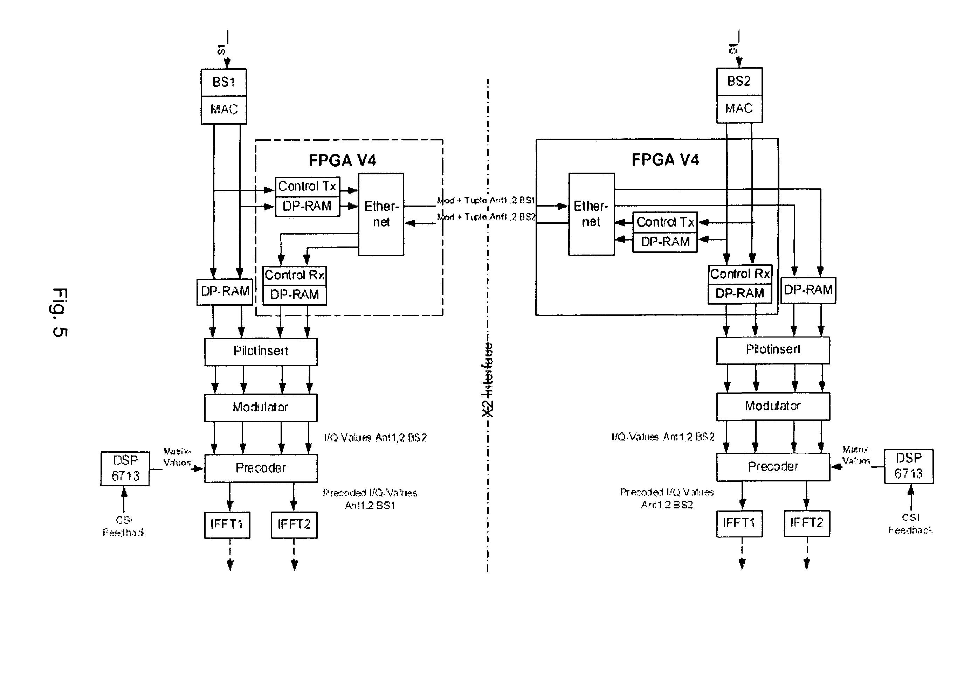

In order to organize such common use of physical Ethernet links for e.g. user data and shared data, the data exchange between the cooperative base stations is organized as Ethernet traffic as well. The practical signal flow in the base stations and their communication over the X2 interface are shown in Fig. 5.

Summarizing the invention's synchroneous data exchange, first it reduces the backhaul load significantly. Second, it tolerates delays up to milliseconds which may occur in the real-world backhaul. Third, the data exchange is easily organized over standard Ethernet, which makes the multiplexing with the CSI very easy (see below).

*C.) CSI feedback over the air*

The third stream is the multi-cell channel state information, CSI, fed back from each terminal to the serving base. The provision of feedback causes a significant overhead and several techniques are suited to minimize the feedback overhead. Firstly, one may provide frequency-domain feedback only for those RBs likely to be assigned to a user. This divides the amount of feedback provided by each terminal by the number of terminals in a cell, in case of a fully loaded cell.

A second alternative is to feedback the channel in the delay domain, instead of in the frequency domain. I.e. one would in principle Fourier-transform the channel, estimate the most relevant taps and feed back to the BS a list of the complex tap amplitudes and their delays.

A combination of both methods might be useful as well. Let us assign a certain frequency subband to a terminal, within which cooperative transmission is potentially used. Ideally, this subband is a contiguous aggregation of sub-carriers. Inside this subband having a reduced bandwidth and therefore also a reduced temporal resolution, the terminal estimates the most relevant taps and their delays and sends them back to the base station.

Next one may exploit correlation in time- and frequency domains. At low mobility and in a channel with limited multipath, correlation is very likely. In a scenario where demanding users are not likely to be mobile, the feedback rate can be reduced significantly. However, there is an inevitable up-link delay in the order of 5 ms for LTE. Moreover, the distribution of the CSI over the network and the computation of the precoder weights takes additional time. The overall delay calls for the use of prediction techniques.

The invention propose to send such feedback as Ethernet packets over the air, in parallel to the uplink user data. These packets are formed so that a terminal always packs the entire multi-cell channel matrix in a given sub-band in one packet with or without prior compression. Such packets are fed out of the receiver signal processing chain using a dedicated Ethernet port marked as "CSI" at the terminal.

*D.) Organization of the data flows using VLAN tags*

Using Ethernet packets increases the implementation effort at first sight but it enables many new opportunities for the organization of the mobile network. First, it becomes very easy to record the CSI on standard computers, i.e. the invention provides a powerful measurement interface which may even be used at the application layer, e.g. to switch the transmission quality of a video stream depending on the instantanous channel state.

Second, the invention enables a simple and powerful method to organize the feeder data, CSI and shared data flows in the backhaul of the cooperative base station system. The concept can be extended to more than two base stations and subgroups of base stations can be selected in a very flexible manner for the purpose of cooperative transmission. Furthermore it is ensured that not more data are passed through the network than actually needed.

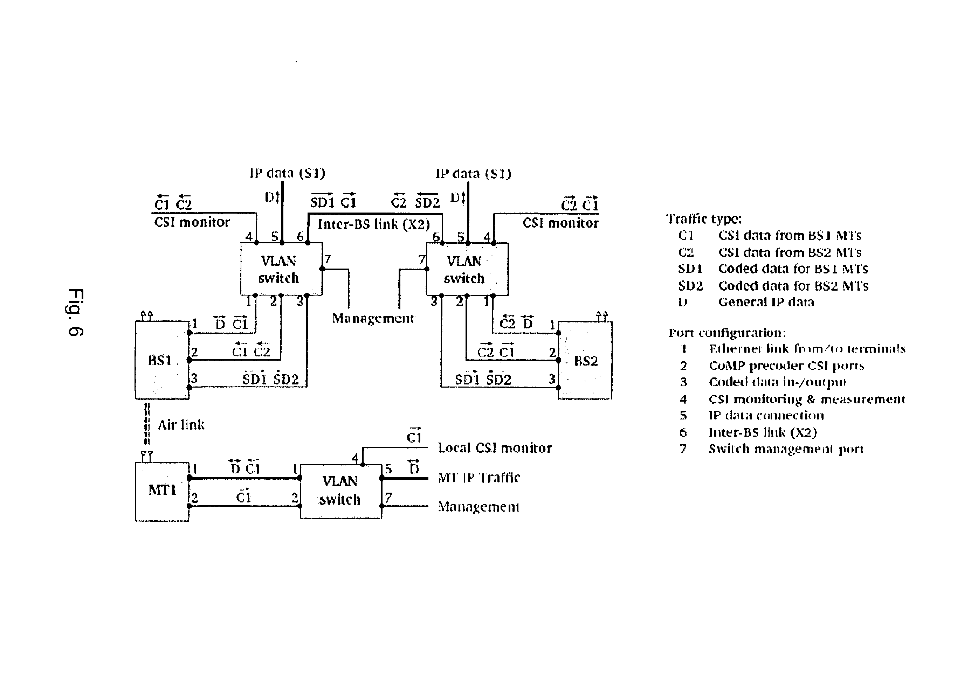

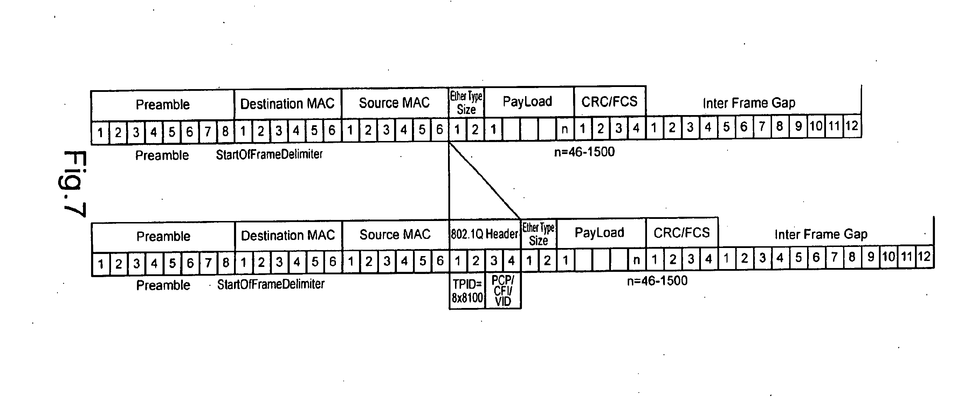

The signaling network is shown in Fig. 6 for two cooperative base stations. It relies on widely available low-cost equipment for the IEEE802.3 Ethernet standard. Furthermore, the invention takes profit of an existing standard extension, namely the so-called Virtual Local Area Networks, VLANs, described in IEEE 802.1q. VLANs are based on a packet-switching technique which requires the use of an additional VLAN tag field in each packet (see Fig. 7).

The additional VLAN tag field has the following format:

**16 bits 3 bits 1 bit 12 bits**

TPID PCP CFI VID

- Tag Protocol Identifier (TPID): a 16-bit field set to a value of 0x8100 in order to identify the frame as an IEEE 802.1Q-tagged frame. This field is located at the same position as the EtherType/Size field in untagged frames, and is used to distinguish the frame from untagged frames.

- Priority Code Point (PCP): a 3-bit field which refers to the IEEE 802.1p priority. It indicates the frame priority level from 0 (lowest) to 7 (highest), which can be used to prioritize different classes of traffic (voice, video, data, etc).

- Canonical Format Indicator (CFI): a 1-bit field. If the value of this field is 1, the MAC address is in non-canonical format. If the value is 0, the MAC address is in canonical format. It is always set to zero for Ethernet switches. CFI is used for compatibility between Ethernet and Token Ring networks.

- VLAN Identifier (VID): a 12-bit field specifying the VLAN to which the frame belongs. A value of 0 means that the frame does not belong to any VLAN; in this case the 802.1Q tag specifies only a priority and is referred to as a priority tag. The hexadecimal value of 0xFFF is reserved. All other values may be used as VLAN identifiers, allowing up to 4094 VLANs.

VLAN-enabled Ethernet switches can be configured so that a packet at a given input is switched to a certain output port depending on the VID. In a given switch, up to 4094 different input-output switching tables can be predefined.

In the CoMP network, this VLAN functionality can be used very efficiently to multiplex and demultiplex the different types of traffic: CSI feedback in uplink direction, exchange of data between cooperative BS and application data of the MT (see Fig. 6). The CSI is packed into a standard Ethernet packet using a multicast address. Packets denoted as C1 in Fig. 6 are created by the physical layer processing and sent to port 2 of the MT over Ethernet. Next there is a switch adding the VLAN tag to the C1 packets identifying them as CSI feedback to be distributed in a specific set of cooperative base stations. Identification of both the cluster and the traffic type is encoded in the VID.

VLAN switches in the network are preconfigured eventually by the mobility management entity (MME) in the SAE network or any other entity organizing the flow of any data stream in the CoMP network. This entity knows the physical network topology. It derives the routes in the network over which the messages flow optimally to support the CoMP transmission. In each Ethernet switch, the packet switching rules for all possible cluster configurations are preconfigured using fixed switching tables depending on the VIDs. For organizing the traffic flow, the serving base station has to inform the terminal over the downlink control channel which VID address is used in the CSI packets identifying the assigned cooperation cluster.

Both signals, i.e. the assignment of the VID and the corresponding VLAN tags in the CSI packets fed back over the uplink are transmitted over the air. Thus they are detectable, and thus the use of the proposed method can be proven.

By using an accompanied VID, IP application data (denoted as D) for the terminal served by the base station are identified at input 5 (see Fig. 6). In the VLAN switch, the CSI is multiplexed with data on output 1. Port 1 at the MT can be regarded as a transparent Ethernet tunnel to the serving BS over the wireless link.

At the BS, the multiplexed up-link traffic is fed again into a VLAN switch. Based on the VIDs, the switch splits CSI and data packets and forwards them into different ports. The CSI stream C1 is copied into several output ports: The input of the precoder at BS1 (2), a mirror of port 2 used for monitoring and measurements (4) and the inter-BS link (6) denoted as X2 interface in the LTE/SAE standardization. In addition to the C1 stream, a shared data stream SD1 containing the already encoded and scheduled downlink data for MT1 is also forwarded to port 6 of the switch. The switch at BS2 in Fig. 6 performs equivalent packet switching. As a result, the data streams C2 and SD2 arrive on port 6 of the switch and they forwarded to port 2 and 3 of BS1, respectively.

In summary, the invention enables the efficient organization of user data, CSI feedback and shared data flows in the network behind a mobile radio system using cooperative base stations. The method is based on existing network protocols and allows the use of cheap off-the-shelf equipment. The assignment of the VLAN identifier (VID) over the downlink control channel and the use of it for the CSI feedback over the uplink are both clearly detectable. One may frequently find other terminals transmitting their feedback in other cells using the same VIDs. This proofs the use of VIDs for the purpose of coordinated multipoint (CoMP) transmission.

In the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

LIST of REFERENCES

[1] J. Winters, Optimum combining in digital mobile radio with cochannel interference, IEEE Transactions on Vehicular Technology, Vol. 33, No. 3, pp. 144-155, Aug 1984.

[2] P. Baier, M. Meurer, T. Weber, and H. Troger, "Joint transmission (JT), an alternative rationale for the downlink of time division CDMA using multi-element transmit antennas," Proc. IEEE ISSSTA '00, 2000.

[3] S. Shamai and B. Zaidel, "Enhancing the cellular downlink capacity via co-processing at the transmitting end," Proc. IEEE VTC '01 Spring, vol. 3, pp. 1745-1749, 2001.

[4] T. Weber, I. Maniatis, A. Sklavos, Y. Liu, E. Costa, H. Haas, and E. Schulz, "Joint transmission and detection integrated network (JOINT), a generic proposal for beyond 3G systems," Proc. ICT'02, vol. 3, pp. 479-483, 2002.

[5] A. Goldsmith, S. Jafar, N. Jindal, and S. Vishwanath, "Capacity limits of MIMO channels," IEEE J. Sel. Areas Commun., vol. 21, no. 5, pp. 684-702, June 2003.

[6] H. Huang and S. Venkatesan, "Asymptotic downlink capacity of coordinated cellular networks," Proc. ACSSC '04, vol. 1, pp. 850-855, 2004.

[7] L. Thiele, V. Jungnickel, "Adaptive MIMO transmission in a realistic multicell scenario," Proc. IEEE Radio and Wireless Symposium, 2008, pp.531-534, Jan. 2008.

[8] V. Jungnickel, M. Schellmann, L. Thiele, T. Wirth, T. Haustein, O. Koch, E. Zirwas, and E. Schulz, "Interference aware scheduling in the multiuser MIMO-OFDM downlink," IEEE Commun. Mag., vol. 47, pp. 56-66, 2009.

[9] H. Olofsson, J. Naslund, J. Skold, "Interference diversity gain in frequency hopping GSM," in Proc. IEEE 45th Vehicular Technology Conference 1995, Vol. 1, pp. 102-106.

[10] L. Thiele, M. Schellmann, W. Zirwas, and V. Jungnickel, Capacity Scaling of Multiuser MIMO with Limited Feedback in a Multicell Environment, 41 st Asilomar Conference on Signals, Systems and Computers, Monterey, USA, IEEE, Nov. 2007, invited

[11] M. H. M. Costa, "Writing on dirty paper," IEEE Trans. Inf. Theory, vol. IT-29, No. 3, pp. 439-441, May 1983.

[12] W. Zirwas, J. H. Kim, V. Jungnickel, M. Schubert, T. Weber, A. Ahrens, and M. Haardt, Distributed Antenna Systems. Auerbach, 2007, ch. 10, Distributed Organization of Cooperative Antenna Systems, pp. 279-311.

[13] V. Jungnickel, L. Thiele, M. Schellmann, T. Wirth, W. Zirwas, T. Haustein, and E. Schulz, "Implementation concepts for distributed cooperative transmission," Proc. ACSSC '08, oct 2008.

[14] W. Zirwas, W. Mennerich, M. Schubert, L. Thiele, V. Jungnickel, and E. Schulz, Cooperative Transmission Schemes. CRC Press, Taylor and Francis Group, 2009.

[15] 3GPP TS 36.300 v8.2.0, "Technical specification group radio access network; evolved universal terrestrial radio access (e-utra) and evolved universal terrestrial radio access network (e-utran); overall description; stage 2," Tech. Rep., 9 2007.

**Claims**

1. Mobile communication method in a network using coordinated multipoint, CoMP, transmission, the network comprising a group of base stations serving a plurality of mobile terminals and Virtual Local Area Networks, VLAN, enabled Ethernet switches, the method being **characterized in that**
   preconfiguring, at network planning, the VLAN enabled Ethernet switches;
   each network data and signaling packet to be exchanged within the cooperation cluster of K base stations involved in CoMP transmission is tagged with an identifier defining the set of base stations in the cluster, wherein the network protocol is Ethernet protocol and the identifiers are Virtual Local Area Networks, VLAN, group numbers VLAN identifier, VID, being assigned over a wireless downlink control channel to the terminals and used within the group for organizing the data flows;
   wherein in each Ethernet switch, the packet switching rules for all possible cluster configurations are preconfigured using fixed switching tables depending on the VIDs;
   the serving base station informs the respective terminal over the downlink control channel which VID address is used in the channel state information, CSI, packets identifying the assigned cooperation cluster; and
   wherein each terminal uses the assigned VLAN identifier for the CSI feedback over the uplink channel.

2. The method of claim 1, wherein
   feeder link data for each mobile terminal are transmitted using the Ethernet protocol;
   shared data between base stations involved in the CoMP transmission is exchanged using the same protocol; and
   downlink channel state information, CSI, measured by each mobile terminal is transmitted to the serving base station using the same protocol.

3. The method of claim 2, wherein the data flow for a given terminal over the S 1 link from the advanced gateway, aGW, is terminated at the serving master base station enhanced NodeB, eNB, and, data are then packed into transport blocks, encoded and mapped onto the radio bearer, RB, and after the MAC layer, the already mapped and encoded data are copied and the copy is forwarded over the X2 interface to all base stations involved in the CoMP transmission.

4. The method of claim 2 or 3, wherein the channel state information, CSI, fed back from each terminal to the serving base is provided as frequency-domain feedback only for those RBs likely to be assigned to a user.

5. The method of claim 2 or 3, wherein the channel state information, CSI, fed back from each terminal to the serving base, is provided in the delay domain.

6. The method of any of claims 2 to 5, wherein the channel state information, CSI, fed back from each terminal to the serving base station using Ethernet protocol, is transmitted in parallel to the uplink user data.

7. The method of claim 6, wherein the packets are formed so that a terminal always packs the entire multi-cell channel matrix in a given sub-band in one packet.

8. The method of claim 1, wherein the VLAN group number is located in the packet at the position being used, in untagged frames, by the EtherType/Size field.

9. Mobile communication system in a network using coordinated multipoint, CoMP, transmission, the network comprising a group of base stations serving a plurality of mobile terminals, the system being **characterized in that**
the network comprises Virtual Local Area Networks, VLAN, enabled Ethernet switches preconfigured at network planning;
each network data and signaling packet to be exchanged within the cooperation cluster of K base stations involved in CoMP transmission is tagged with an identifier defining the set of base stations in the cluster, wherein the network protocol is Ethernet protocol and the identifiers are Virtual Local Area Networks, VLAN, group numbers VLAN identifier, VID, being assigned over a wireless downlink control channel to the terminals and used within the group for organizing the data flows;
wherein in each Ethernet switch, the packet switching rules for all possible cluster configurations are preconfigured using fixed switching tables depending on the VIDs;
the serving base station is configured to inform the respective terminal over the downlink control channel which VID address is used in the channel state information, CSI, packets identifying the assigned cooperation cluster; and
wherein each terminal is configured to use the assigned VLAN identifier for the CSI feedback over the uplink channel.

10. Base station in a mobile communication system in a network using coordinated multipoint, CoMP, transmission, the network comprising a group of base stations serving a plurality of mobile terminals and Virtual Local Area Networks, VLAN, enabled Ethernet switches preconfigured at network planning, wherein in each Ethernet switch, the packet switching rules for all possible cluster configurations are preconfigured using fixed switching tables depending on the VIDs, wherein each network data and signaling packet to be exchanged within the cooperation cluster of K base stations involved in CoMP transmission is tagged with an identifier defining the set of base stations in the cluster, wherein the identifiers are Virtual Local Area Networks, VLAN, group numbers VLAN identifier, VID, being assigned over a wireless downlink control channel to the terminals and used within the group for organizing the data flows, the base station being **characterized in that**
it is adapted to receive feeder link data for each mobile terminal using Ethernet protocol;
it is configured to inform the respective terminal over the downlink control channel which VID address is used in the channel state information, CSI, packets identifying the assigned cooperation cluster;
it is adapted to exchange shared data with other base stations using Ethernet protocol; and
it is adapted to receive from each mobile terminal it serves measured downlink channel state information, CSI, using Ethernet protocol and using the assigned VLAN identifier.

**Patentansprüche**

1. Mobilkommunikationsverfahren in einem Netzwerk mittels Coordinated multi-point, CoMP-, Übertragung, wobei das Netzwerk eine Gruppe von Basisstationen aufweist, die mehrere mobile Endgeräte und für virtuelle lokale Netzwerke, VLAN, freigegebene Ethernet-Switches bedienen, wobei das Verfahren **dadurch gekennzeichnet ist, dass**
bei der Netzwerkplanung die für ein VLAN freigegebenen Ethernet-Switches vorkonfiguriert werden;
jedes Netzwerkdaten- und Signalisierungspaket, das im Kooperationscluster von K Basisstationen ausgetauscht werden soll, die an der CoMP-Übertragung beteiligt sind, mit einer Kennung markiert wird, die den Satz von Basisstationen im Cluster definiert, wobei das Netzwerkprotokoll das Ethernet-Protokoll ist und die Kennungen virtuelle lokale Netzwerk-, VLAN-, Gruppennummern, VLAN-Kennungen, VIDs sind, die den Endgeräten über einen drahtlosen Abwärtsstreckensteuerkanal zugewiesen werden und in der Gruppe zum Organisieren der Datenflüsse verwendet werden;
wobei in jedem Ethernet-Switch die Paketvermittlungsregeln für alle möglichen Clusterkonfigurationen mittels fester Vermittlungstabellen vorkonfiguriert sind, die von den VIDs abhängen;
die bedienende Basisstation dem jeweiligen Endgerät über den Abwärtsstreckensteuerkanal meldet, welche VID-Adresse in den Kanalstatusinformations-, CSI-, Paketen verwendet wird, die den zugewiesenen Kooperationscluster identifizieren; und
wobei jedes Endgerät die zugewiesene VLAN-Kennung für die CSI-Rückmeldung über den Aufwärtsstreckenkanal verwendet.

2. Verfahren nach Anspruch 1, wobei Speisestreckendaten für jedes mobile Endgerät mittels des Ethernet-Protokolls übertragen werden; zwischen den an der CoMP-Übertragung beteiligten Basisstationen gemeinsam genutzte Daten mittels desselben Protokolls ausgetauscht werden; und durch jedes mobile Endgerät gemessene Abwärtsstreckenkanalstatusinformationen, CSI mittels desselben Protokolls zur bedienenden Basisstation übertragen werden.

3. Verfahren nach Anspruch 2, wobei der Datenfluss für ein gegebenes Endgerät über die S1-Strecken vom erweiterten Gateway, aGW, am Enhanced NodeB, eNB der bedienenden Masterbasisstation abgeschlossen wird, und Daten dann in Transportblöcke gepackt, codiert und auf den Funkträger, RB abgebildet werden, und nach der MAC-Schicht die schon abgebildeten und codierten Daten kopiert werden, und die Kopie über das X2-Interface an alle an der CoMP-Übertragung beteiligten Basisstationen weitergeleitet werden.

4. Verfahren nach Anspruch 2 oder 3, wobei die Kanalstatusinformationen, CSI, die von jedem Endgerät an die bedienende Basisstation zurückgemeldet werden, als Frequenzbereichsrückmeldung nur für jene RBs bereitgestellt werden, die wahrscheinlich einem Benutzer zugewiesen werden sollen.

5. Verfahren nach Anspruch 2 oder 3, wobei die Kanalstatusinformationen, CSI, die von jedem Endgerät an die bedienende Basis zurückgemeldet werden, im Verzögerungsbereich bereitgestellt werden.

6. Verfahren nach einem der Ansprüche 2 bis 5, wobei die Kanalstatusinformationen, CSI, die von jedem Endgerät an die bedienende Basisstation mittels des Ethernet-Protokolls zurückgemeldet werden, parallel zu den Aufwärtsstreckenbenutzerdaten übertragen werden.

7. Verfahren nach Anspruch 6, wobei die Pakete so gebildet werden, dass ein Endgerät immer die gesamte Mehrfachzellen-Kanalmatrix in einem gegebenen Teilband in ein Paket packt.

8. Verfahren nach Anspruch 1, wobei die VLAN-Gruppennummer im Paket an der Position angeordnet wird, die in unmarkierten Rahmen durch das Ether-Type/Size-Feld verwendet wird.

9. Mobilkommunikätionssystem in einem Netzwerk mittels Coordinated multi-point, CoMP-, Übertragung, wobei das Netzwerk eine Gruppe von Basisstationen aufweist, die mehrere mobile Endgeräte bedienen, wobei das System **dadurch gekennzeichnet ist, dass**

das Netzwerk für virtuelle lokale Netzwerke, VLAN, freigegebene Ethernet-Switches aufweist, die bei der Netzwerkplanung vorkonfiguriert werden; jedes Netzwerkdaten- und Signalisierungspaket, das im Kooperationscluster von K Basisstationen ausgetauscht werden soll, die an der CoMP-Übertragung beteiligt sind, mit einer Kennung markiert ist, die den Satz von Basisstationen im Cluster definiert, wobei das Netzwerkprotokoll das Ethernet-Protokoll ist und die Kennungen virtuelle lokale Netzwerk-, VLAN-, Gruppennummern, VLAN-Kennungen, VIDs sind, die den Endgeräten über einen drahtlosen Abwärtsstreckensteuerkanal zugewiesen werden und in der Gruppe zum Organisieren der Datenflüsse verwendet werden; wobei in jedem Ethernet-Switch die Paketvermittlungsregelnfür alle möglichen Clusterkonfigurationen mittels fester Vermittlungstabellen vorkonfiguriert sind, die von den VIDs abhängen; die bedienende Basisstation konfiguriert ist, dem jeweiligen Endgerät über den Abwärtsstreckensteuerkanal zu melden, welche VID-Adresse in den Kanalstatusinformations-, CSI Paketen verwendet wird, die den zugewiesenen Kooperationscluster identifizieren; und wobei jedes Endgerät konfiguriert ist, die zugewiesene VLAN-Kennung für die CSI-Rückmeldung über den Aufwärtsstreckenkanal zu verwenden.

10. Basisstation in einem Mobilkommunikationssystem in einem Netzwerk mittels Coordinated multi-point, CoMP-, Übertragung, wobei das Netzwerk eine Gruppe von Basisstationen aufweist, die mehrere mobile Endgeräte und für virtuelle lokale Netzwerke, VLAN, freigegebene Ethernet-Switches bedienen, die bei der Netzwerkplanung vorkonfiguriert werden, wobei in jedem Ethernet-Switch die Paketvermittlungsregeln für alle möglichen Clusterkonfigurationen, mittels fester Vermittlungstabellen vorkonfiguriert sind, die von den VIDs abhängen, wobei jedes Netzwerkdaten- und Signalisierungspaket, das im Kooperationscluster von K Basisstationen ausgetauscht werden soll, die an der CoMP-Übertragung beteiligt sind, mit einer Kennung markiert sind, die den Satz von Basisstationen im Cluster definiert, wobei die Kennungen virtuelle lokale Netzwerk-, VLAN-, Gruppennummern, VLAN-Kennungen, VIDs sind, die den Endgeräten über einen drahtlosen Abwärtsstreckensteuerkanal zugewiesen werden und in der Gruppe zum Organisieren der Datenflüsse verwendet werden, wobei die Basisstation **dadurch gekennzeichnet ist, dass**

sie eingerichtet ist, Speisestreckendaten für jedes mobile Endgerät mittels des Ethernet-Protokolls zu empfangen;

sie konfiguriert ist, dem jeweiligen Endgerät über den Abwärtsstreckensteuerkanal zu melden, welche VID-Adresse in den Kanalstatusinformations-, CSI, Paketen verwendet wird, die den zugewiesenen Kooperationscluster identifizieren;

sie eingerichtet ist, gemeinsam genutzte Daten mit anderen Basisstationen mittels des Ethernet-Protokolls auszutauschen; und

sie eingerichtet ist, von jedem mobilen Endgerät, das sie bedient, gemessene Abwärtsstrecken-Kanalstatusinformationen, CSI, mittels des Ethernet-Protokolls und mittels der zugewiesenen VLAN-Kennung zu empfangen.

## Revendications

1. Procédé de communication mobile dans un réseau recourant à une transmission multipoint coordonnée CoMP, le réseau comprenant un groupe de stations de base desservant une pluralité de terminaux mobiles et des commutateurs Ethernet activés de réseaux locaux virtuels VLAN, ledit procédé étant **caractérisé**

**par** la préconfiguration, en projet de réseau, des commutateurs Ethernet activés VLAN ;

en ce que chaque paquet de données de réseau et de signalisation ayant à être échangé à l'intérieur du cluster de coopération de K stations de base impliquées dans la transmission CoMP est étiqueté avec un identificateur définissant l'ensemble des stations de base du cluster, le protocole de réseau étant un protocole Ethernet et les identificateurs des identificateurs VID de numéros de groupe de réseaux locaux virtuels VLAN, assignés par un canal radio de commande de liaison descendante vers les terminaux et utilisés à l'intérieur du groupe pour organiser le flux de données ;

les règles de commutation de paquet étant prédéfinies dans chaque commutateur Ethernet, pour toutes les configurations de cluster possibles en recourant à des tableaux de commutation fixés en fonction des VID ;

en ce que la station de base serveur informe le terminal respectif par le canal de commande de liaison descendante sur l'adresse VID utilisée dans les paquets d'information de statut de canal CSI, identifiant le cluster de coopération assigné ; et

chaque terminal utilisant l'identificateur VLAN assigné pour le retour de CSI par le canal de liaison ascendante.

2. Procédé selon la revendication 1, où
des données de liaison de connexion pour chaque terminal mobile sont transmises en recourant au protocole Ethernet ; des données partagées entre stations de base impliquées dans la transmission CoMP sont échangées en recourant au même protocole ; et

l'information de statut de canal de liaison descendante CSI mesurée par chaque terminal mobile est transmise à la station de base serveur en recourant au même protocole.

3. Procédé selon la revendication 2, où le flux de données pour un terminal donné via la liaison S1 depuis la passerelle avancée aGW se termine à la station de base serveur maître eNodeB, eNB, et où les données sont empaquetées ensuite dans des blocs de transport, encodées et mappées sur le support radio RB, et où, après la couche MAC, les données déjà mappées et encodées sont copiées, la copie étant adressée via l'interface X2 à toutes les stations de base impliquées dans la transmission CoMP.

4. Procédé selon la revendication 2 ou 3, où l'information de statut de canal CSI retournée par chaque terminal à la base serveur n'est délivrée en tant que retour de domaine de fréquence qu'aux RB probablement assignés à un utilisateur.

5. Procédé selon la revendication 2 ou 3, où l'information de statut de canal CSI retournée par chaque terminal à la base serveur est délivrée dans le domaine retard.

6. Procédé selon l'une des revendications 2 à 5, où l'information de statut de canal CSI retournée par chaque terminal à la station de base serveur en recourant au protocole Ethernet, est transmise parallèlement aux données d'utilisateur en liaison ascendante.

7. Procédé selon la revendication 6, où les paquets sont formés de telle manière qu'un terminal empaquette toujours la matrice de canal multicellulaire entière dans une sous-bande donnée en un seul paquet.

8. Procédé selon la revendication 1, où le numéro de groupe VLAN est localisé dans le paquet à la position utilisée par le champ EtherType/Size dans des trames non étiquetées.

9. Système de communication mobile dans un réseau recourant à une transmission multipoint coordonnée CoMP, le réseau comprenant un groupe de stations de base desservant une pluralité de terminaux mobiles, ledit système étant **caractérisé en ce que** le réseau comprend des commutateurs Ethernet activés de réseaux locaux virtuels VLAN préconfigurés en projet de réseau ;

**en ce que** chaque paquet de données de réseau et de signalisation ayant à être échangé à l'intérieur du cluster de coopération de K stations de base impliquées dans la transmission CoMP est étiqueté avec un identificateur définissant l'ensemble des stations de base du cluster, le protocole de réseau étant un protocole Ethernet et les identificateurs des identificateurs VID de numéros de groupe de réseaux locaux virtuels VLAN, assignés par un canal radio de commande de liaison descendante vers les terminaux et utilisés à l'intérieur du groupe pour organiser le flux de données ;

les règles de commutation de paquet étant prédéfinies dans chaque commutateur Ethernet, pour toutes les configurations de cluster possibles en recourant à des tableaux de commutation fixés en fonction des VID ;

**en ce que** la station de base serveur est prévue pour informer le terminal respectif par le canal de commande de liaison descendante sur l'adresse VID utilisée dans les paquets d'information de statut de canal CSI, identifiant le cluster de coopération assigné ; et

chaque terminal étant prévu pour utiliser l'identificateur VLAN assigné pour le retour de CSI par le canal de liaison ascendante.

10. Station de base d'un système de communication mobile dans un réseau recourant à une transmission multipoint coordonnée CoMP, le réseau comprenant un groupe de stations de base desservant une pluralité de terminaux mobiles et des commutateurs Ethernet activés de réseaux locaux virtuels VLAN préconfigurés en projet de réseau, les règles de commutation de paquet étant prédéfinies dans chaque commutateur Ethernet, pour toutes les configurations de cluster possibles en recourant à des tableaux de commutation fixés en fonction des VID, où chaque paquet de données de réseau et de signalisation ayant à être échangé à l'intérieur du cluster de coopération de K stations de base impliquées dans la transmission CoMP est étiqueté avec un identificateur définissant l'ensemble des stations de base du cluster, les identificateurs étant des identificateurs VID de numéros de groupe de réseaux locaux virtuels VLAN, assignés par un canal radio de commande de liaison descendante vers les terminaux et utilisés à l'intérieur du groupe pour organiser le flux de données, la station de base étant **caractérisée**

**en ce qu'**elle est prévue pour recevoir des données de liaison de connexion pour chaque terminal mobile recourant au protocole Ethernet ;

**en ce qu'**elle est prévue pour informer le terminal respectif par le canal de commande de liaison descendante sur l'adresse VID utilisée dans les paquets d'information de statut de canal CSI, identifiant le cluster de coopération assigné ;

**en ce qu'**elle est prévue pour échanger des données partagées avec d'autres stations de base recourant au protocole Ethernet ; et

**en ce qu'**elle est prévue pour recevoir de chaque terminal mobile qu'elle dessert une information mesurée de statut de canal de liaison descendante CSI, recourant au protocole Ethernet et à l'identificateur VLAN assigné.

Fig. 1

Fig. 2a

Fig. 2b

Fig. 3a

Fig. 3b

Fig. 3c

Fig. 4

Fig. 5

Fig. 6

Fig.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JUNGNICKEL V. et al.** Coordinated Multipoint Trials in the Downlink. *GLOBECOM WORKSHOPS,* 20 November 2009, 1-7
- **FOULI et al.** The road to carrier-grade Ethernet - [Topics in optical communications. *IEEE COMMUNICATIONS MAGAZINE,* 01 March 2009, vol. 47 (3), S30-S38
- **SANCHEZ R. et al.** *Ethernet as carrier grade technology: developments and innovations,* 01 September 2008, vol. 46 (9), 88-94
- Consideration of Backhaul Technology Evolution in Support of CoMP. *3GPP DRAFT; R1-093344, 3RD GENERATION PARTNERSHIP PROJECT (3GPP,* 24 August 2009
- **J. WINTERS.** Optimum combining in digital mobile radio with cochannel interference. *IEEE Transactions on Vehicular Technology,* August 1984, vol. 33 (3), 144-155
- **P. BAIER ; M. MEURER ; T. WEBER ; H. TROGER.** Joint transmission (JT), an alternative rationale for the downlink of time division CDMA using multi-element transmit antennas. *Proc. IEEE ISSSTA '00,* 2000
- **S. SHAMAI ; B. ZAIDEL.** Enhancing the cellular downlink capacity via co-processing at the transmitting end. *Proc. IEEE VTC '01 Spring,* 2001, vol. 3, 1745-1749
- **T. WEBER ; I. MANIATIS ; A. SKLAVOS ; Y. LIU ; E. COSTA ; H. HAAS ; E. SCHULZ.** Joint transmission and detection integrated network (JOINT), a generic proposal for beyond 3G systems. *Proc. ICT'02,* 2002, vol. 3, 479-483
- **A. GOLDSMITH ; S. JAFAR ; N. JINDAL ; S. VISHWANATH.** Capacity limits of MIMO channels. *IEEE J. Sel. Areas Commun.,* June 2003, vol. 21 (5), 684-702
- **H. HUANG ; S. VENKATESAN.** Asymptotic downlink capacity of coordinated cellular networks. *Proc. ACSSC '04,* 2004, vol. 1, 850-855
- **L. THIELE ; V. JUNGNICKEL.** Adaptive MIMO transmission in a realistic multicell scenario. *Proc. IEEE Radio and Wireless Symposium,* January 2008, 531-534
- **V. JUNGNICKEL ; M. SCHELLMANN ; L. THIELE ; T. WIRTH ; T. HAUSTEIN ; O. KOCH ; E. ZIRWAS ; E. SCHULZ.** Interference aware scheduling in the multiuser MIMO-OFDM downlink. *IEEE Commun. Mag.,* 2009, vol. 47, 56-66
- **H. OLOFSSON ; J. NASLUND ; J. SKOLD.** Interference diversity gain in frequency hopping GSM. *Proc. IEEE 45th Vehicular Technology Conference,* 1995, vol. 1, 102-106
- **L. THIELE ; M. SCHELLMANN ; W. ZIRWAS ; V. JUNGNICKEL.** Capacity Scaling of Multiuser MIMO with Limited Feedback in a Multicell Environment. *41 st Asilomar Conference on Signals, Systems and Computers,* November 2007
- **M. H. M. COSTA.** Writing on dirty paper. *IEEE Trans. Inf. Theory,* May 1983, vol. IT-29 (3), 439-441
- Distributed Antenna Systems. **W. ZIRWAS ; J. H. KIM ; V. JUNGNICKEL ; M. SCHUBERT ; T. WEBER ; A. AHRENS ; M. HAARDT.** Distributed Organization of Cooperative Antenna Systems. 2007, 279-311
- **V. JUNGNICKEL ; L. THIELE ; M. SCHELLMANN ; T. WIRTH ; W. ZIRWAS ; T. HAUSTEIN ; E. SCHULZ.** Implementation concepts for distributed cooperative transmission. *Proc. ACSSC,* 08 October 2008
- **W. ZIRWAS ; W. MENNERICH ; M. SCHUBERT ; L. THIELE ; V. JUNGNICKEL ; E. SCHULZ.** Cooperative Transmission Schemes. CRC Press, Taylor and Francis Group, 2009
- Technical specification group radio access network; evolved universal terrestrial radio access (e-utra) and evolved universal terrestrial radio access network (e-utran); overall description; stage 2. *3GPP TS 36.300 v8.2.0,* 2007